# EUROPEAN PATENT APPLICATION

(11) **EP 4 296 883 A1**
(43) Date of publication of application: **27.12.2023**
(21) Application number: 21926665.7
(22) Date of filing: 17.08.2021
(51) Int. Cl.: G06F 40/216, G06F 40/279

(54) **RESEARCH PERSPECTIVE PRESENTATION SYSTEM AND RESEARCH PERSPECTIVE PRESENTATION METHOD**

(30) Priority: 17.02.2021 JP 2021023567
(71) Applicant: Hitachi, Ltd., Tokyo 100-8280 (JP)
(72) Inventor: TERUYA, Eri, Tokyo 100-8280 (JP); TAKEUCHI, Tadashi, Tokyo 100-8280 (JP)
(74) Representative: MERH-IP Matias Erny Reichl Hoffmann Patentanwälte PartG mbB
(86) International application number: PCT/JP2021/029975
(87) International publication number: WO 2022/176236

(57) **Abstract**

A research viewpoint presentation system calculates, for a document group, a level of potential relevance between two words, using a co-occurrence rate determined based on a meaning of a word or a context in which the word appears, taking into consideration a potential relationship between the two words included in the document group; calculates, for the document group, a level of existing relevance between two words, based on a frequency of actual appearance of the two words; selects a pair of two words for pairs of two words extracted from the document group, based on an index determined by comparing the potential relevance level with the existing relevance level; extracts recommended research viewpoint information concerning the selected pair of two words from the document group; and outputs the extracted recommended research viewpoint information.

## Description

### CROSS-REFERENCE TO RELATED APPLICATIONS

This application claims priority to Japanese Patent Application No. 2021-023567 filed on February 17, 2021, the contents of which are incorporated herein by reference.

### Technical Field

The present invention relates to a research viewpoint presentation system and a research viewpoint presentation method.

### Background Art

PTL 1 describes a trend evaluation apparatus that makes a trend evaluation, based on the number of articles on a specific word and the number of postings on a social networking service (SNS) on the specific word. The trend evaluation apparatus receives, from a user, input of a target keyword for the trend evaluation and an acquisition period of a web article to be subjected to the trend evaluation; conducts a semantic analysis of web articles acquired from outside; selects a web article whose distance to the target keyword is smaller than a given value from the acquired web articles, using a result of the semantic analysis; selects a word whose distance to the target keyword is smaller than a given value as a trend word from a group of words making up the selected web article; calculates, for each selected trend word, a trend evaluation value, using the number of web articles including the trend word; and outputs a trend evaluation value of each trend word in the acquisition period.

NPL 1 describes a technique of extracting information on complicated material science, such as a structure providing the foundation of the periodic table and relationships between structures and characteristics of materials, from an enormous volume of scientific literatures, using natural language processing. According to the above technique, a potential relationship between keywords (a relationship between a substance name and properties, or the like) is extracted, based on co-occurrence rates of words that are determined by learning past scientific literatures.

### Citation List

### Patent Literature

PTL 1: JP 2018-206190 A

### Non-Patent Literature

NPL 1: Vahe Tshitoyan et al., Unsupervised word embeddings capture latent knowledge from materials science literature, Nature 571, 95-98 (2019), [retrieved on 2021/2/15] URL <doi.org/10.1038/s41586-019-1335-8>

### Summary of Invention

### Technical Problem

In the fields of material and product development, materials Informatics (MI) is widely used as a method for efficiently developing a highly functional material in a short period. In data-driven material development using MI, enormous document information on scientific/technical documents, etc., is analyzed to extract a correlation between structures and characteristics/functions of materials, and the extracted correlation is used as guidelines for research and development of new materials. The progress of such data-driven material development further increases the speed of material development. It is thus expected that the need of speeding up examination of a research viewpoint to initiate and planning of a research strategy will become higher.

Now, to plan an effective research strategy in data-driven material development, it is preferable that a research viewpoint from which no or few existing researches has been conducted but which offers high potential importance be provided. For example, in PTL 1 described above, the evaluation value of the trend word in the acquisition period of the web article to be subjected to trend evaluation is obtained. However, because this evaluation value is obtained based on a result of comparison with a group of words making up an existing web article, an unknown research viewpoint cannot be presented. In PTL 2, on the other hand, the potential relationship between the keywords is extracted from an enormous volume of scientific literatures, based on the co-occurrence rates of words. However, because a model having learned past literatures is used, a lot of known viewpoints are extracted as a research viewpoint from which no or few existing researches has been conducted but which offers high potential importance is barely extracted, which is a problem.

The present invention has been conceived in view of such a background, and it is an object of the invention to provide a research viewpoint presentation system and a research viewpoint presentation method that can extract information useful for planning a research strategy, from an enormous amount of information.

### Solution to Problem

One aspect of the present invention for achieving the above object is a research viewpoint presentation system including: a document information management unit that manages a document group that is an extraction source of information; a potential relevance level calculation unit that, for the document group, calculates a potential relevance level that is a value indicating a level of potential relevance between two words, using a co-occurrence rate determined based on a meaning of a word or a context in which the word appears, taking into consideration a potential relationship between the two words included in the document group; an existing relevance level calculation unit that, for the document group, calculates an existing relevance level that is a value indicating a level of existing relevance between two words, based on a frequency of actual appearance of the two words; a recommended research viewpoint extracting unit that, for pairs of two words extracted from the document group, selects a pair of two words, based on an index determined by comparing the potential relevance level with the existing relevance level, and extracts recommended research viewpoint information concerning the selected pair of two words from the document group; and an information presentation unit that outputs the extracted recommended research viewpoint information.

Other problems disclosed in the present application and solutions to the problems will be clearly described by embodiments and drawings for carrying out the invention.

### Advantageous Effects of Invention

According to the present invention, information useful for planning a research strategy can be extracted from an enormous amount of information.

### Brief Description of Drawings

[FIG. 1] FIG. 1 depicts a schematic configuration of a research viewpoint presentation system.
[FIG. 2] FIG. 2 depicts an example of an information processing apparatus used to configure the research viewpoint presentation system.
[FIG. 3] FIG. 3 depicts an example of a document information table.
[FIG. 4] FIG. 4 depicts an example of a document classification table.
[FIG. 5] FIG. 5 depicts an example of a word table.
[FIG. 6] FIG. 6 depicts an example of a potential relevance level table.
[FIG. 7] FIG. 7 depicts an example of an existing relevance level table.
[FIG. 8] FIG. 8 depicts an example of a word trend table.
[FIG. 9] FIG. 9 depicts an example of a word pair trend table.
[FIG. 10] FIG. 10 depicts an example of an integrated information table.
[FIG. 11] FIG. 11 depicts an example of a recommended research viewpoint information table.
[FIG. 12] FIG. 12 is a flowchart for explaining an overall process.
[FIG. 13] FIG. 13 is a flowchart for explaining details of an existing relevance level calculation process.
[FIG. 14] FIG. 14 is a flowchart for explaining details of a recommended research viewpoint extraction process.
[FIG. 15] FIG. 15 depicts an example of an extraction condition setting screen.
[FIG. 16] FIG. 16 depicts an example of an information presentation screen.
[FIG. 17] FIG. 17 depicts an example of a recommended research viewpoint presentation screen.

### Description of Embodiments

Embodiments will now be described with reference to the drawings. An embodiment of the present invention will hereinafter be described with reference to drawings. The following description and drawings are exemplary one for explaining the present invention, and are omitted and simplified on a necessary basis for clear explanations. The present invention may also be implemented in various forms other than the embodiments described herein. Each constituent element is provided as a single constituent element or a plurality of constituent elements, both of which, unless otherwise specified, are applicable.

In the following description, the same or similar constituent elements are denoted by the same reference signs and redundant description may be omitted. In the following description, a prefix "S" appended to reference numbers represents a step. In the following description, pieces of information are described, using such expressions as "table" and "information" in some cases. These pieces of information, however, may be expressed as data structures different from such tables.

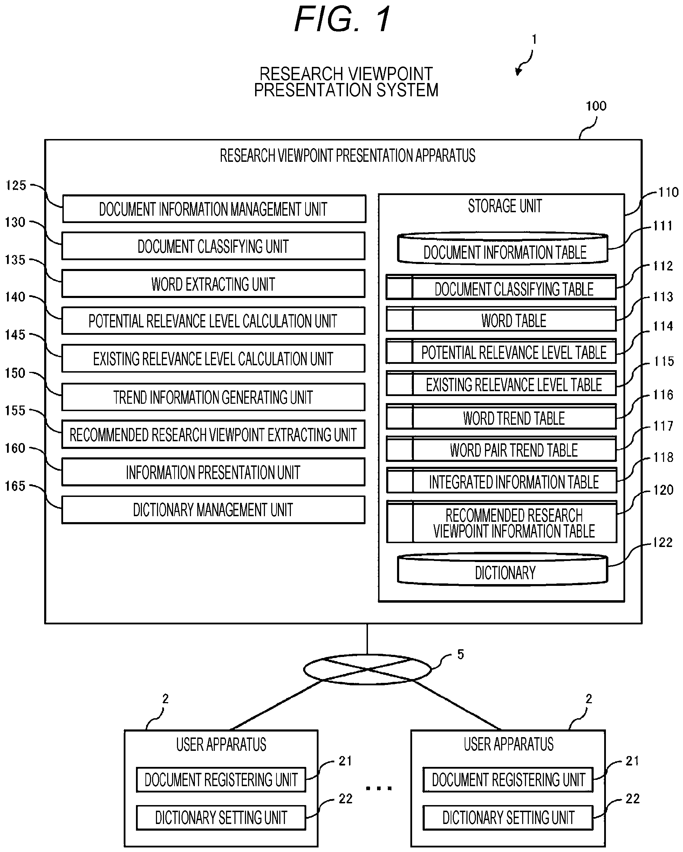

FIG. 1 depicts a schematic configuration of an information processing system (hereinafter "research viewpoint presentation system 1"), which will be described as an embodiment of the present invention. The research viewpoint presentation system 1 analyzes useful documents (patent literatures, various papers, business reports, company reports, news, etc.) used for MI (materials informatics) to extract information useful in setting guidelines for research and development of new materials, e.g., a correlation between structures and characteristics/functions of materials, and provides a user with extraction results. For example, the research viewpoint presentation system 1 extracts a research viewpoint with high potential importance, from which no or a few existing researches/developments has been conducted, and presents the extracted research viewpoint to the user.

It should be noted that in the following description, a structure in which one or more lines or sentences, one or more clauses or phrases, two or more words, and the like, the lines, sentences, clauses, phrases, and words describing a given topic, are put in systematic order will be referred to as a document, and various processes executed in units of documents will be described exemplary. Units in execution of the processes are, however, not necessarily limited to the units of documents.

As shown in FIG. 1, the research viewpoint presentation system 1 includes a research viewpoint presentation apparatus 100 and one or more user apparatuses 2. The research viewpoint presentation apparatus 100 and the user apparatus 2 are each configured by using an information processing apparatus (computer), and are connected in a state in which both apparatuses can communication with each other via the communication network 5. The communication network 5 is, for example, a local area network (LAN), a wide area network (WAN), the Internet, the public communication line, or a dedicated line.

As shown in FIG. 1, the research viewpoint presentation apparatus 100 includes, as main functional units, a storage unit 110, a document information management unit 125, a document classifying unit 130, a word extracting unit 135, a potential relevance level calculation unit 140, an existing relevance level calculation unit 145, a trend information generating unit 150, a recommended research viewpoint extracting unit 155, an information presentation unit 160, and a dictionary management unit 165.

Among these units, the storage unit 110 stores, as main information (data), a document information table 111, a document classification table 112, a word table 113, a potential relevance level table 114, an existing relevance level table 115, a word trend table 116, a word pair trend table 117, an integrated information table 118, a recommended research viewpoint information table 120, and a dictionary 122.

The document information management unit 125 stores/manages information about documents used for extraction of a research viewpoint (which information includes documents and attribute information on the documents), in the document information table 111 The document information management unit 125 acquires the documents from, for example, the user apparatus 2 and a different information processing apparatus communicably connected to the research viewpoint presentation apparatus 100. The document information management unit 125 acquires the documents from the Internet by, for example, web scraping or web crawling. Hereinafter, documents themselves (documental entities) stored/managed in the document information table 111 will be referred to as "documents" and information about documents (documents themselves) will be referred to as "document information".

The document classifying unit 130 classifies documents managed in the document information table 111 in accordance with given classification criteria, such as type categories (e.g., patent literatures, various papers, business reports, company reports, news, etc.) and topic categories (organic, inorganic, experiments, theories, etc.), and stores/manages classification results in the document classification table 112. The document classifying unit 130 classifies documents using, for example, a rule base or a given machine learning method (K-means or the like). The content of the document classification table 112 is used, for example, to narrow down search results, reduce a search area, or grasp a difference in tendency between classification categories.

The word extracting unit 135 extracts a keyword (hereinafter, "word"), which will be handled (to which attention is paid) in various processes to be described later, from a document, and stores/manages the extracted word in the word table 113. By applying a named entity recognition (NER) technology to document information, for example, the word extracting unit 135 extracts a word for each of categories like "substance name", "application name", "property name", "technology name", "purpose name", and "effect name". The word extracting unit 135 extracts a word for, for example, each of classification units for classification by the document classifying unit 130.

The potential relevance level calculation unit 140 calculates a level of potential relevance between two words (hereinafter, "potential relevance level"), based on documents managed in the document information table 111, and stores/manages the calculated potential relevance level in the potential relevance level table 114. For example, the potential relevance level calculation unit 140 generates a word distributed representation (word embedding, e.g., a distributed representation generated by word2vec, BERT, etc.) of a word included in a document managed in the document information table 111, determines a co-occurrence rate of two words, using the generated distributed representation of each word, and obtains the determined co-occurrence rate or a value based on the co-occurrence rate, as the potential relevance level. By using the word distributed representation, the co-occurrence rate can be determined, in which co-occurrence rate a potential relationship between the two words is considered through a semantic analysis based on the meaning of the words and a context in which the words appears.

The existing relevance level calculation unit 145 determines a level of actual relevance between two words (hereinafter, "existing relevance level"), based on each document managed in the document information table 111, and stores/manages the determined existing relevance level in the existing relevance level table 115. For example, the existing relevance level calculation unit 145 determines the number of documents in which two words appear simultaneously, the documents being among the documents managed in the document information table 111, to be the existing relevance level of the two words. In another case, for example, the existing relevance level calculation unit 145 determines a value given by, for example, performing Apriori analysis or a Jaccard coefficient calculation on two words, to be the existing relevance level (e.g., carrying out Apriori analysis with one document being regarded as one basket to determine the existing relevance level).

Based on a known trend analysis technique (e.g., a technique disclosed in JP 2018-206190 A), the trend information generating unit 150 generates (extracts or calculates) information on a trend (tendency, fashion, etc.) in each word, which information will hereinafter be referred to as "word trend information", and information on a trend in a pair of two words (hereinafter, "word pair"), which information will hereinafter be referred to as "word pair trend information". The trend information generating unit 150 generates word trend information and word pair trend information, for example, for each category (patent literatures, various papers, business reports, company reports, news, etc.) classified by the document classifying unit 130. In the following description, the word trend information and the word pair trend information may be collectively referred to as "trend information".

The recommended research viewpoint extracting unit 155 generates the integrated information table 118 which is a table storing information associated with information included in at least one of the document information table 111, the document classification table 112, the word table 113, the potential relevance level table 114, the existing relevance level table 115, the word trend table 116, and the word pair trend table 117. The recommended research viewpoint extracting unit 155 extracts information to be presented to the user (recommended research viewpoint, which will hereinafter be referred to as "recommended research viewpoint information"), from the generated integrated information table 118, and registers the extracted information with the recommended research viewpoint information table 120. For example, the recommended research viewpoint extracting unit 155 extracts recommended research viewpoint information while carrying out interactive processing with the user via the user apparatus 2. The recommended research viewpoint extracting unit 155 extracts the recommended research viewpoint information from the integrated information table 118, based on, for example, a word the user pays attention to (hereinafter, "word-to-pay-attention-to"), a category the user pays attention to (hereinafter, "category-to-pay-attention-to"), and an index the user pays attention to (hereinafter, "index-to-pay-attention-to").

The information presentation unit 160 generates a screen (an information presentation screen 1600 and a recommended research viewpoint presentation screen 1700 that will be described later) for presenting information selected by the recommended research viewpoint extracting unit 155 to the user, and transmits the generated screen to the user apparatus 2.

The dictionary management unit 165 manages the dictionary 122 (unique representation dictionary or the like), which is referred to when the word extracting unit 135 extracts a word from the document information. Working in cooperation with the user apparatus 2, for example, the dictionary management unit **175** makes setting of the dictionary 122.

As shown in FIG. 1, the user apparatus 2 includes a document registering unit 21 and a dictionary setting unit 22, as main functional units.

Among these units, the document registering unit 21 provides a user interface for setting (registering, editing, or deleting) the content of the document information table 111. In addition, the document registering unit 21 transmits the setting content inputted by the user, to the research viewpoint presentation apparatus 100.

The dictionary setting unit 22 provides a user interface for setting (registering, editing, or deleting) the content of the dictionary 122. In addition, the dictionary setting unit 22 transmits the set contents to the research viewpoint presentation apparatus 100.

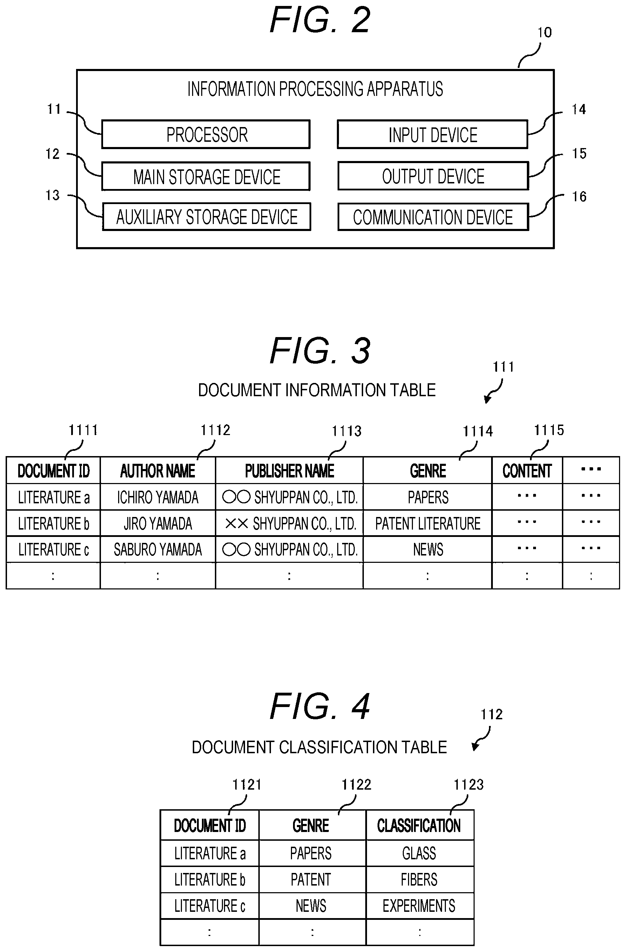

FIG. 2 depicts an example of an information processing apparatus used to configure the research viewpoint presentation apparatus 100 and the user apparatus 2. The information processing apparatus 10 shown in FIG. 2 includes a processor 11, a main storage device 12, an auxiliary storage device 13, an input device 14, an output device 15, and a communication device 16. The information processing apparatus 10 is provided as, for example, a personal computer, a server, a smartphone, a tablet, and the like.

The whole or a part of the information processing apparatus 10 may be constructed by using virtual information processing resources provided by a virtualization technology, a process space separation technology, or the like. It may be constructed, for example, as a virtual server provided by a cloud system. Some or all functions the information processing apparatus 10 provides may be implemented by, for example, services a cloud system provides via an application programming interface (API) or the like. Furthermore, Some or all functions the information processing apparatus 10 provides may be implemented by, for example, software as a service (SaaS), platform as a service (PaaS), infrastructure as a service (IaaS), or the like.

Each of the research viewpoint presentation apparatus 100 and the user apparatus 2 may be provided by using the same information processing apparatus 10 (common hardware). The research viewpoint presentation apparatus 100 may be provided by using, for example, a plurality of information processing apparatuses 10 connected to be capable of communicating with each other.

The processor 11 shown in FIG. 2 is configured by using, for example, a central processing unit (CPU), a micro processing unit (MPU), a graphics processing unit (GPU), a field programmable gate array (FPGA), an application specific integrated circuit (ASIC), an artificial intelligence (AI) chip, or the like.

The main storage device 12 is a device that stores programs and data, and is provided as, for example, a read only memory (ROM), a random access memory (RAM), a non-volatile memory (non-volatile RAM or NVRAM), or the like.

The auxiliary storage device 13 is, for example, a solid state drive (SSD), a hard disk drive, an optical storage device (compact disc or CD), a digital versatile disc (DVD), a storage system, an IC card, a recording medium reader/writer, such as an SD card or an optical recording medium, a storage area of a cloud server, or the like. The auxiliary storage device 13 can read programs and data through the recording medium reader or the communication device 16. Programs and data stored in the auxiliary storage device 13 are read into the main storage device 12 on a necessary basis.

The input device 14 is an interface that receives external input, and is provided as, for example, a keyboard, a mouse, a touch panel, a card reader, a pen-based tablet computer, a voice input device, or the like.

The output device 15 is an interface that outputs various pieces of information, such as the progress and results of a process. The output device 15 is, for example, a display device (liquid crystal monitor, liquid crystal display or LCD, graphic card, and the like) that outputs the various pieces of information in a visual form, a device (voice output device, e.g., speaker) that outputs the various pieces of information in the form of a voice or sound, or a device (printer or the like) that outputs the various pieces of information in the form of letters. It should be noted that the information processing apparatus 10 may be configured to, for example, input and output information to and from a different apparatus via the communication device 16.

The input device 14 and the output device 15 make up a user interface that carries out interactive processing (receiving information, presenting information, and the like) for interactions with the user.

The communication device 16 is a device that makes communication with a different apparatus. The communication device 16 is a wired or wireless communication interface that makes communication with a different apparatus via the communication network 5, and is provided as, for example, a network interface card (NIC), a wireless communication module, a USB module, or the like.

Into the information processing apparatus 10, for example, an operating system, a file system, a database management system (DBMS), such as a relational database and a NoSQL, or a key-value store (KVS) may be incorporated.

The functions of the research viewpoint presentation apparatus 100 and the user apparatus 2 are implemented by the processor 11 reading and executing programs stored in the main storage device 12 or by hardware (FPGA, ASIC, AI chip, etc.) making up the research viewpoint presentation apparatus 100 and the user apparatus 2. The functions of the research viewpoint presentation apparatus 100 and the user apparatus 2 are implemented by, for example, using various known data mining methods, such as text data mining, various known natural language processing methods (morpheme analysis, syntax analysis, semantic analysis, context analysis, feature amount extraction, word distributed representation, unique representation extraction, text classification, and sequence labeling), and various known machine learning methods (deep learning method, such as deep neural network (DNN) and recurrent neural network (RNN)). The research viewpoint presentation apparatus 100 and the user apparatus 2 store the above various pieces of information (data) as, for example, files managed in a table of a database or by a file system.

Main information managed by the storage unit 110 will now be described.

FIG. 3 depicts an example of the document information table 111. The above-described document information is managed in the document information table 111. As shown in FIG. 3, the document information table 111 is made up of a plurality of entries (records) each having items (fields) of document ID 1111, author name 1112, publisher name 1113, genre 1114, and content 1115. One entry of the document information table 111 corresponds to one document.

Among the above items, the document ID 1111 has an entry of a document identifier (hereinafter, "document ID") which is an identifier for a document. The author name 1112 has an entry of an author name which is the name of the author of the document. The publisher name 1113 has an entry of a publisher name which is the name of a publisher published the document. The genre 1114 has an entry of information indicating the type (genre, format (type)) of the document. The content 1115 has an entry of the substance (content) of the document. Information stored in the document information table 111 may include the number of citations of documents, the importance of the publisher, the number of copies published, the importance of the author, and the number of related documents. The data type of the substance of the document entered in the field of content 1115 is not necessarily limited to a specific data type. It is assumed in this embodiment that documents are managed as text format data (text data).

FIG. 4 depicts an example of the document classification table 112. In the document classification table 112, classification results given by the document classifying unit 130 are managed. As shown in FIG. 4, the document classification table 112 is made up of a plurality of entries each having items of document ID 1121, genre 1122, and classification 1123. One entry of the document classification table 112 corresponds to one document.

Among the above items, the document ID 1121 has an entry of a document ID. The genre 1122 has an entry of information indicating the type of the document. The classification 1123 has an entry of information indicating classification of the document from a content viewpoint (a technical field or material field discussed in the document, the type of the descriptive content (experiments, verifications, applications, etc.), and the like)).

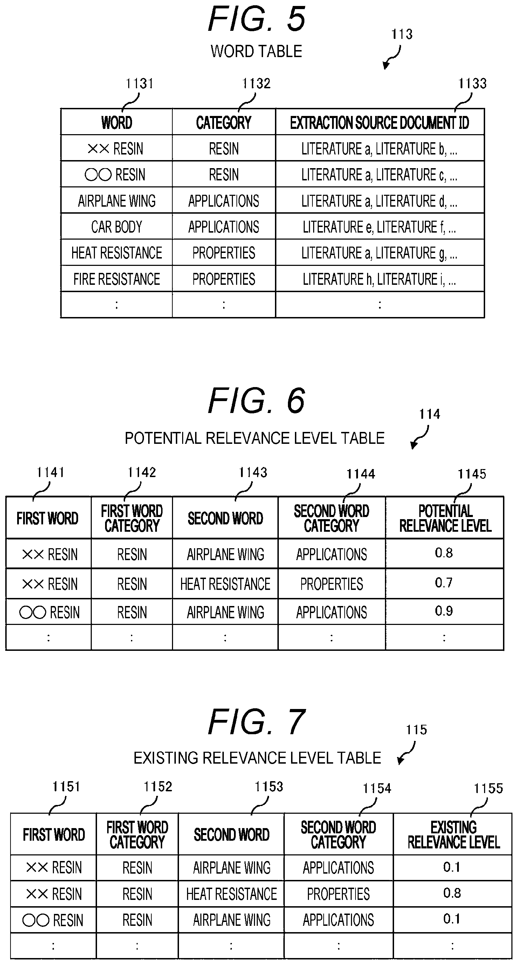

FIG. 5 depicts an example of the word table 113. In the word table 113, information about words the word extracting unit 135 has extracted from documents managed in the document information table 111 (text data entered in the content 1115) is managed. As shown in FIG. 5, the word table 113 is made up of a plurality of entries each having items of word 1131, category 1132, and extraction source document ID 1133. One entry of the word table 113 corresponds to one word.

In the above items, the word 1131 has an entry of a word extracted by the word extracting unit 135. The category 1132 has an entry of a category to which the word specified by the word extracting unit 135 upon its word extraction belongs. The extraction source document ID 1133 has an entry of document IDs for one or more documents from which the word is extracted.

FIG. 6 depicts an example of the potential relevance level table 114. In the potential relevance level table 114, information about a level of potential relevance between two words (which will hereinafter be referred to respectively as "first word" and "second word"), the level of potential relevance being determined by the potential relevance level calculation unit 140, is managed. As shown in FIG. 6, the potential relevance level table 114 is made up of a plurality of entries each having items of first word 1141, first word category 1142, second word 1143, second word category 1144, and potential relevance level 1145. One entry of the potential relevance level table 114 corresponds to one pair of words.

Among the above items, the first word 1141 has an entry of a first word. The first word category 1142 has an entry of a category to which the first word belongs. The second word 1143 has an entry of the second word. The second word category 1144 has an entry of a category to which the second word belongs. The potential relevance level 1145 has an entry of a potential relevance level (i.e., level of potential relevance) that the potential relevance level calculation unit 140 has determined for a pair of the first word and the second word.

FIG. 7 depicts an example of the existing relevance level table 115. In the existing relevance level table 115, information about a level of existing relevance between two words, the level of existing relevance being determined by the existing relevance level calculation unit 145, is managed. As shown in FIG. 7, the existing relevance level table 115 is made up of a plurality of entries each having items of first word 1151, first word category 1152, second word 1153, second word category 1154, and existing relevance level 1155. One entry of the existing relevance level table 115 corresponds to one pair of words.

Among the above items, the first word 1151 has an entry the first word. The first word category 1152 has an entry of a category to which the first word belongs. The second word 1153 has an entry of the second word. The second word category 1154 has an entry of a category to which the second word belongs. The existing relevance level 1155 has an entry of an existing relevance level (i.e., level of existing relevance) that the existing relevance level calculation unit 145 has determined for a pair of the first word and the second word.

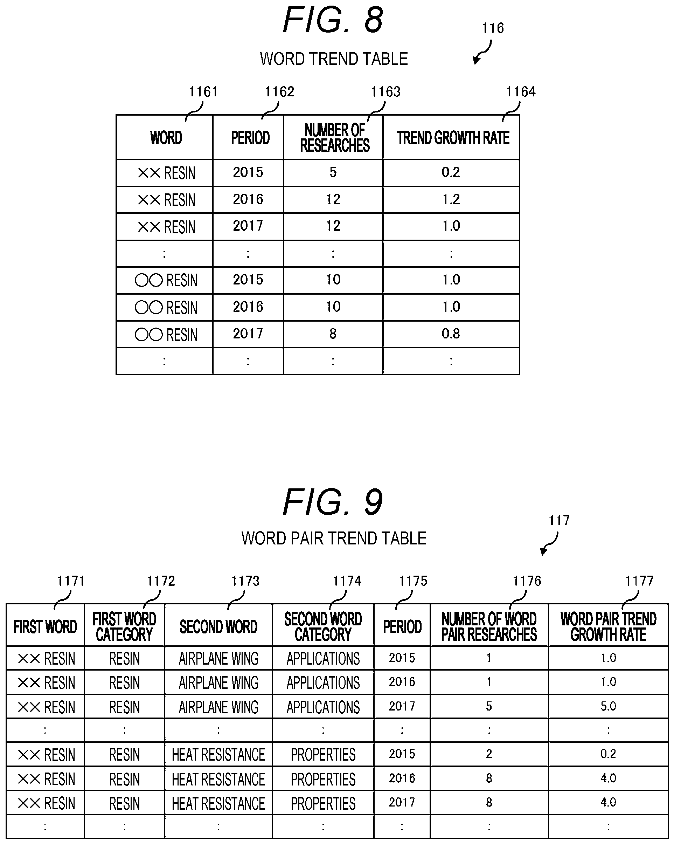

FIG. 8 depicts an example of the word trend table 116. In the word trend table 116, word trend information generated by the trend information generating unit 150 is managed. As shown in FIG, 8, the word trend table 116 is made up of a plurality of entries each having items of word 1161, period 1162, the number of researches 1163, and a trend growth rate 1164. One entry of the word trend table 116 corresponds to word trend information on one word in a certain period.

In the above items, the word 1161 has an entry of a word. The period 1162 has an entry of information indicating a period to which the word trend information applies. In this example, the period 1162 has an entry of a year to which the word trend information applies. However, the form of information indicating the period to which the word trend information applies is not necessarily limited to years. For example, a specific period or a month may be specified as the period to which the word trend information applies. The number of researches 1163 has an entry of the number of researched made on the word in the period. The trend growth rate 1164 has an entry of a growth rate (hereinafter, "trend growth rate") of the number of researches 1163 made on the word in the period. In this example, the number of researches and the trend growth rate are shown as examples of the word trend information. The word trend information, however, may be information indicating a word trend that is different from the number of researches and the trend growth rate.

FIG. 9 depicts an example of the word pair trend table 117. In the word pair trend table 117, word pair trend information generated by the trend information generating unit 150 is managed. As shown in FIG. 9, the word pair trend table 117 is made up of a plurality of entries each having items of first word 1171, first word category 1172, second word 1173, second word category 1174, period 1175, the number of word pair researches 1176, and a word pair trend growth rate 1177. One entry of the word pair trend table 117 corresponds to word pair trend information on one word pair in a certain period.

Among the above items, the first word 1171 has an entry of a first word making up the word pair. The first word category 1172 has an entry of a category to which the first word belongs. The second word 1173 has an entry of a second word making up the word pair. The second word category 1174 has an entry of a category to which the second word belongs. The period 1175 has an entry of information indicating a period to which the word pair end information applies. In this example, the period 1175 has an entry of a year to which the word pair trend information applies. However, the form of information indicating the period to which the word pair trend information applies is not necessarily limited to years. For example, a specific period or a month may be specified as the period to which the word pair trend information applies. The number of word pair researches 1176 has an entry of the number of researches (hereinafter, "the number of word pair researches") made on the word pair in the period. The word pair trend growth rate 1177 has an entry of a growth rate (hereinafter, "word pair trend growth rate") of the number of word pair researches 1176 made on the word pair in the period. In this example, the number of word pair researches and the word pair trend growth rate are shown as examples of the word pair trend information. The word pair trend information, however, may be information indicating a word pair trend that is different from the number of word pair researches and the word pair trend growth rate.

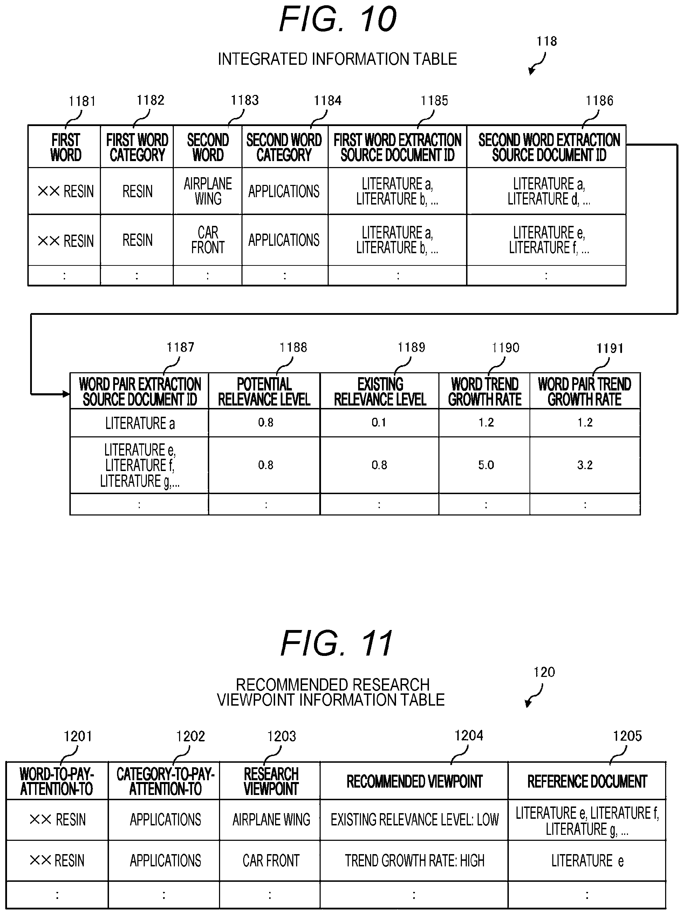

FIG. 10 depicts an example of the integrated information table 118. In the integrated information table 118, information the recommended research viewpoint extracting unit 155 has generated based on the document information table 111, the document classification table 112, the word table 113, the word trend table 116, the word pair trend table 117, the potential relevance level table 114, and the existing relevance level table 115 is managed. As shown in FIG. 10, the integrated information table 118 is made up of a plurality of entries each having items of first word 1181, first word category 1182, second word 1183, second word category 1184, first word extraction source document ID 1185, second word extraction source document ID 1186, word pair extraction source document ID 1187, potential relevance level 1188, existing relevance level 1189, word trend growth rate 1190, and word pair trend growth rate 1191. One entry of the integrated information table 118 corresponds to one pair of words.

Among the above items, the first word 1181 has an entry of a first word making up the pair of words. The first word category 1182 has an entry of a category to which the first word belongs. The second word 1183 has an entry of a second word making up the pair of words. The second word category 1184 has an entry of a category to which the second word belongs.

The first word extraction source document ID 1185 has an entry of a document ID for an extraction source document from which the first word is extracted. The second word extraction source document ID 1186 has an entry of a document ID for an extraction source document from which the second word is extracted. The word pair extraction source document ID 1187 has an entry of a document ID for an extraction source document from which both the first word and the second word are extracted.

The potential relevance level 1188 has a set entry of a potential relevance level determined for the pair of words. The existing relevance level 1189 has a set entry of an existing relevance level determined for the pair of words.

The word trend growth rate 1190 has a set entry of a word trend growth rate of the first word. The word pair trend growth rate 1191 has a set entry of a word pair trend growth rate of the set of words.

FIG. 11 depicts an example of the recommended research viewpoint information table 120. The content of the recommended research viewpoint information table 120 is generated by the recommended research viewpoint extracting unit 155, based on the integrated information table 118. The recommended research viewpoint information table 120 is made up of one or more entries each having items of word-to-pay-attention-to 1201, category-to-pay-attention-to 1202, research viewpoint 1203, recommended viewpoint 1204, and reference document 1205. One entry of the recommended research viewpoint information table 120 corresponds to one word extracted by the recommended research viewpoint extracting unit 155 (one of words representing a research viewpoint recommended to the user).

Among the above items, the word-to-pay-attention-to 1201 has an entry of a word presented as a recommended research viewpoint. The category-to-pay-attention-to 1202 has an entry of a category to which the word belongs. This category is the category (first word category 1182) that corresponds to the word (first word 1181) in the integrated information table 118. The research viewpoint 1203 has an entry of a recommended research viewpoint. This research viewpoint is the second word 1183 that corresponds to the word (the first word 1181) in the integrated information table 118. The recommended viewpoint 1204 has a set entry of a reason for recommending the research viewpoint. The reason is generated, for example, based on the word trend growth rate 1190 and the word pair trend growth rate 1191 that correspond to the word (first word 1181) in the integrated information table 118. The reference document 1205 has an entry of a document ID for a document which includes the word and a word paired with the word. This document ID is the entry content of the first word extraction source document ID 1185, the second word extraction source document ID 1186, or the word pair extraction source document ID 1187 that corresponds to the word (the first word 1181) in the integrated information table 118.

A process carried out by the research viewpoint presentation system 1 will now be described. A potential relevance level, an existing relevance level, and trend information that will be described below may be calculated for each piece of classification information stored in the document classification table 112 or for each piece of information stored in the document information table 111.

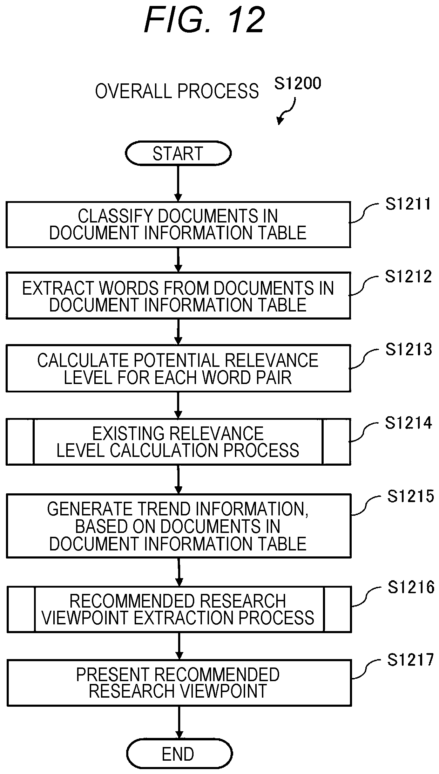

FIG. 12 depicts a flowchart for explaining an overall process (hereinafter "overall process S1200") that is carried out by the research viewpoint presentation system 1 when a research viewpoint extracted based on the document information managed in the document information table 111 is presented to the user. The overall process S1200 will hereinafter be described with reference to FIG. 12. It is assumed that at the start of the overall process S1200, a plenty of document information is accumulated in the document information table 111 to provide the user with useful information. The overall process S1200 is started, for example, when a clear instruction from the user apparatus 2 or the like is received or a scheduled time to start the process arrives.

First, as shown in FIG. 12, the document classifying unit 130 classifies documents managed in the document information table 111 according to the given classification criterion, and registers classification results with the document classification table 112 (S1211).

Subsequently, the word extracting unit 135 extracts words from the documents managed in the document information table 111, and registers extraction results with the word table 113 (S1212).

Subsequently, the potential relevance level calculation unit 140 determines levels of potential relevance between pairs of words (word pairs) extracted by the word extracting unit 135, based on the documents managed in the document information table 111, and registers the determined potential relevance levels with the potential relevance level table 114 (S1213).

Subsequently, the existing relevance level calculation unit 145 determines existing relevance levels, based on the documents managed in the document information table 111, and registers the determined existing relevance levels with the existing relevance level table 115 (S1214).

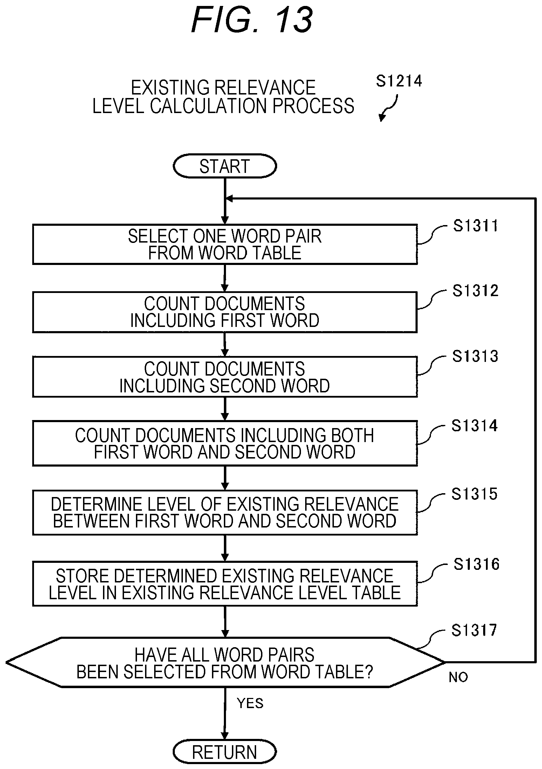

FIG. 13 is a flowchart for explaining details of an existing relevance level calculation process S1214 of FIG. 12. The existing relevance level calculation process S1214 will hereinafter be described with reference to FIG. 13.

First, the existing relevance level calculation unit 145 selects one word pair (a pair of the first word and the second word) from the word table 113 (S1311).

The existing relevance level calculation unit 145 then searches the document information table 111 to count documents including the first word (S1312).

The existing relevance level calculation unit 145 then searches the document information table 111 to count documents including the second word (S1313).

The existing relevance level calculation unit 145 then searches the document information table 111 to count documents including both the first and second words (S1314).

Subsequently, using the numbers counted at S1312 to S1314 and the total number of documents stored in the document information table 111, the existing relevance level calculation unit 145 determines a level of existing relevance between the first word and the second word, using, for example, a method by which the number or ratio of documents in which two words appear simultaneously to the documents managed in the document information table 111 is determined to be an existing relevance level, a method by which a value obtained by Apriori analysis is determined to be an existing relevance level, or a method by which a Jaccard coefficient is determined to be an existing relevance level (S1315).

The existing relevance level calculation unit 145 then adds an entry of the word pair to the existing relevance level table 115, thus entering the existing relevance level determined at S1315 in the fielded of existing relevance level 1155 that corresponds to the entry of the word pair (S1316).

The existing relevance level calculation unit 145 then determines whether it has selected at S1311 all word pairs that can be selected from the word table 113 (S1317). When having selected not all the word pairs (S1317: NO), the existing relevance level calculation unit 145 returns to S1311, from which the same process is repeated on the next word pair. When having selected all the word pairs (S1317: YES), the existing relevance level calculation unit 145 ends the existing relevance level calculation process S1214, and the flow of overall process S1200 proceeds to the next step (S1215).

As shown in FIG. 12, subsequently, the trend information generating unit 150 generates word trend information and word pair trend information, and stores the generated word trend information and word pair trend information respectively in the word trend table 116 and the word pair trend table 117 (S1215).

Subsequently, the recommended research viewpoint extracting unit 155 generates the integrated information table 118, extracts recommended research viewpoint information from the generated integrated information table 118, and registers the extracted information with the recommended research viewpoint information table 120 (S1216).

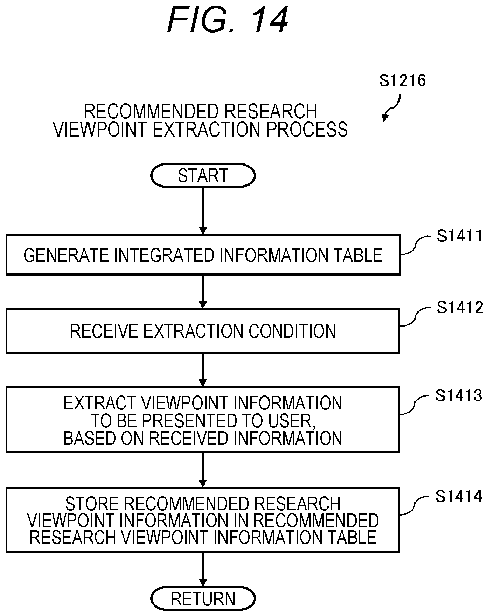

FIG. 14 is a flowchart for explaining details of a recommended research viewpoint extraction process S1216 of FIG. 12. The recommended research viewpoint extraction processing S1216 will hereinafter be described with reference to FIG. 14.

First, the recommended research viewpoint extracting unit 155 generates the integrated information table 118, based on at least one of the document information table 111, the document classification table 112, the word table 113, the word trend table 116, the word pair trend table 117, the potential relevance level table 114, and the existing relevance level table 115 (S1411).

The recommended research viewpoint extracting unit 155 then receives a word-to-pay-attention-to, a category-to-pay-attention-to, and an index-to-pay-attention-to that are set by the user via the user apparatus 2, as an extraction condition for a recommended research viewpoint (S1412). For example, the user apparatus 2 displays a screen on which the user specifies the extraction condition (hereinafter, "extraction condition setting screen 1500"), and receives the user's setting of the extraction condition.

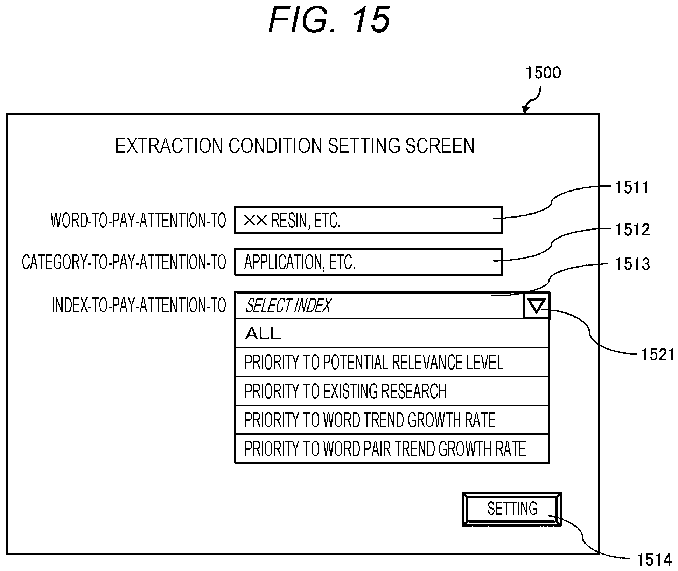

FIG. 15 depicts an example of the extraction condition setting screen 1500. The extraction condition setting screen 1500 shown in FIG. 15 includes a word-to-pay-attention-to setting space 1511, a category-to-pay-attention-to setting space 1512, an index-to-pay-attention-to setting space 1513, and a setting button 1514. The user sets a word-to-pay-attention-to in the word-to-pay-attention-to setting space 1511, sets a category-to-pay-attention-to in the category-to-pay-attention-to setting space 1512, and sets an index-to-pay-attention-to in the index-to-pay-attention-to setting space 1513. Among these setting spaces, the word-to-pay-attention-to setting space 1511 is the space to which input is essential. The category-to-pay-attention-to setting space 1512 and the index-to-pay-attention-to setting space 1513 are, however, spaces to which input is optional. A plurality of words-to-pay-attention-to can be set in the word-to-pay-attention-to setting space 1513.

As shown in FIG. 15, the index-to-pay-attention-to setting space 1513 is provided with a pull-down menu 1521. The user is, therefore, able to select an index-to-pay-attention-to, using the pull-down menu 1521. In this example, the user is able to select any one of these indexes-to-pay-attention-to: "ALL", "priority to potential relevance level", "priority to existing research", "priority to word trend growth rate", and "priority to word pair trend growth rate", from the pull-down menu 1521.

When "ALL" is specified, the recommended research viewpoint extracting unit 155 extracts recommended research viewpoint information, based on each of the above-described methods, for each of the indexes-to-pay-attention-to: "priority to potential relevance level", "priority to existing research", "priority to word trend growth rate", and "priority to word pair trend growth rate". When the index-to-pay-attention-to "ALL" is specified, therefore, the research viewpoint presentation system 1 can present research viewpoints based on various indexes to the user.

When "priority to potential relevance level" is specified, the recommended research viewpoint extracting unit 155 extracts recommended research viewpoint information while giving priority to information with a high potential relevance level and a low existing relevance level (which is determined by, for example, using such conditional expressions as "potential relevance level > preset threshold" and "existing relevance level < preset threshold", "potential relevance level-existing relevance level > preset difference threshold" and "potential relevance level >> existing relevance level"). When the index-to-pay-attention-to "priority to potential relevance level" is specified, therefore, the research viewpoint presentation system 1 can present a research viewpoint from which no or few researches has been conducted but which offers high potential importance, in priority to the user.

When "priority to existing research" is specified, the recommended research viewpoint extracting unit 155 extracts recommended research viewpoint information while giving priority to information with a high potential relevance level and a high existing relevance level (which is determined by, for example, using such a conditional expression as "potential relevance level > preset threshold" and "existing relevance level > preset threshold"). When the index-to-pay-attention-to "priority to existing research" is specified, therefore, the research viewpoint presentation system 1 can present a research viewpoint from which a lot of existing researches have been conducted but which offers high potential importance, in priority to the user.

When "priority to word trend growth rate" is specified, the recommended research viewpoint extracting unit 155 extracts recommended research viewpoint information while giving priority to information with a high potential relevance level, a low existing relevance level, and a high word trend growth rate (which is determined by, for example, using such a conditional expression as "potential relevance level > preset threshold", "existing relevance level < preset threshold", and "word trend growth rate > preset threshold") . When the index-to-pay-attention-to "priority to word trend growth rate" is specified, therefore, the research viewpoint presentation system 1 can present a research viewpoint from which no or a few existing researches has been conducted but which offers high potential importance and high trend property, in priority to the user.

When "priority to word pair trend growth rate" is specified, the recommended research viewpoint extracting unit 155 extracts recommended research viewpoint information while giving priority to information with a high potential relevance level, a low existing relevance level, and a high word pair trend growth rate (which is determined by, for example, using such a conditional expression as "potential relevance level > preset threshold", "existing relevance level < preset threshold", and "word pair trend growth rate > preset threshold"). When the index-to-pay-attention-to "priority to word pair trend growth rate" is specified, therefore, the research viewpoint presentation system 1 can present a research viewpoint from which no or few existing researches has been conducted but which offers high potential importance and high trend property in the word pair category, in priority to the user.

When calculating the priority of research viewpoint information to be presented based on each index-to-pay-attention-to, the recommended research viewpoint extracting unit 155 may weight each parameter contributing to the priority. For example, when the index-to-pay-attention-to "priority to word trend growth rate" is specified, parameters contributing to the priority are a potential relevance level, an existing relevance level, and a word trend growth rate. In such a case, the recommended research viewpoint extracting unit 155 may calculated the priority, based on an index value weighted with effects of these parameters (e.g., an index value given by summing up the parameters each multiplied by a weight).

In addition, when the priority of research viewpoint information to be presented based on each index-to-pay-attention-to is calculated, a potential relevance level, an existing relevance level, and a word trend growth rate, and a word pair trend growth rate, which are calculated for each of document types (patent literatures, various papers, business reports, company reports, news, etc.) or topics (organic, inorganic, experiments, theories, etc.) stored in the document classification table 112 or pieces of information stored in the document information table 111, may be used for extraction of the recommended research viewpoint information.

In addition to the indexes-to-pay-attention-to shown in FIG. 15, an index-to-pay-attention-to based on differences in tendency between document types or topics stored in the document classification table 112 and differences in tendency between pieces of information stored in the document information table 111 may also be used.

An example of the index-to-pay-attention-to based on differences in tendency between document types is "priority to comparison in existing relevance level between research papers and business reports". In the case of using this index-to-pay-attention-to, the recommended research viewpoint information is extracted based on a value given by comparing an existing relevance level calculated from the research papers only with an existing relevance level calculated from the business reports only (the value is determined by, for example, a conditional expression: "existing relevance level calculated from the research papers only-existing relevance level calculated from the business reports only > present threshold"). When the index-to-pay-attention-to "priority to comparison in existing relevance level between research papers and business reports" is specified, therefore, the research viewpoint presentation system 1 can present a research viewpoint from which many researches have been conducted in the research field but few applications have been devised in the business field, in priority to the user. It should be noted that any combinations of documents may be compared in indexes-to-pay-attention-to, which include, for example, "priority to comparison in potential relevance level between research papers and business reports" and "priority to comparison in trend between research papers and business reports".

An example of the index-to-pay-attention-to based on differences in tendency between topics is "priority to comparison in existing relevance level between the organic field and the inorganic field". In the case of using this index-to-pay-attention-to, the recommended research viewpoint information is extracted based on a value given by comparing an existing relevance level calculated from only the documents in the organic field with an existing relevance level calculated from only the documents in the inorganic field (the value is determined by, for example, a conditional expression: "existing relevance level calculated from only the documents in the organic field-existing relevance level calculated from only the documents in the inorganic field > present threshold"). When the index-to-pay-attention-to "priority to comparison in existing relevance level between the organic field and the inorganic field" is specified, therefore, the research viewpoint presentation system 1 can present a research viewpoint from which many researches have been conducted in the organic field but few applications have been devised in the inorganic field (or a research viewpoint from which many researches have been conducted in the inorganic field but few applications have been devised in the organic field), in priority to the user. Hence the research viewpoint can be obtained in view of research information in other fields. It should be noted that any combinations of topics may be compared in indexes-to-pay-attention-to.

In addition to the indexes-to-pay-attention-to shown in FIG. 15, an index-to-pay-attention-to "priority to important documents" may also be used (which means that the recommended research viewpoint information is extracted with priority given to information with a high potential relevance level, a low existing relevance level, and the high importance of a document, using the importance of the document calculated from the number of citations of the document including an extracted word, the importance of the publisher, the number of copies published, and the importance of the author).

When the user operates the setting button 1514 shown in FIG. 15, what is set in each of the above setting spaces is transmitted to the research viewpoint presentation apparatus 100.

FIG. 14 is referred to again, in which the recommended research viewpoint extracting unit 155 extracts the recommended research viewpoint information from the integrated information table 118, based on information received via the extraction condition setting screen 1500 (S1413) .

For example, in a case where a word-to-pay-attention-to is solely specified and "ALL" is specified as an index-to-pay-attention-to on the extraction condition setting screen 1500 shown in FIG. 15, the recommended research viewpoint extracting unit 155 extracts information based on the indexes to-pay-attention-to "priority to potential relevance level", "priority to existing research", "priority to word trend growth rate", and "priority to word pair trend growth rate", as the recommended research viewpoint information, in accordance with an entry in the integrated information table 118, the entry having the word-to-pay-attention-to set in the field of first word 1181 (or second word 1183). In another case where a word-to-pay-attention-to is solely specified and an index-to-pay-attention-to different from "ALL" is specified in the index-to-pay-attention-to setting space, the recommended research viewpoint extracting unit 155 extracts only the information based on the specified index-to-pay-attention-to, as the recommended research viewpoint information.

In a case where a word-to-pay-attention-to and a category-to-pay-attention-to are both specified and "ALL" is specified as an index-to-pay-attention-to on the extraction condition setting screen 1500, the recommended research viewpoint extracting unit 155 extracts information based on the indexes to-pay-attention-to "priority to potential relevance level", "priority to existing research", "priority to word trend growth rate", and "priority to word pair trend growth rate", as the recommended research viewpoint information, in accordance with an entry in the integrated information table 118, the entry having the word-to-pay-attention-to set in the field of first word 1181 (or second word 1183) and having the category-to-pay-attention-to set in the field of first word category 1182 (or second word category 1184). In another case where a word-to-pay-attention-to and a category-to-pay-attention-to are both specified and an index-to-pay-attention-to different from "ALL" is specified in the index-to-pay-attention-to setting space, the recommended research viewpoint extracting unit 155 extracts only the information based on the specified index-to-pay-attention-to, as the recommended research viewpoint information.

FIG. 14 is referred to again, in which the recommended research viewpoint extracting unit 155 stores the extracted recommended research viewpoint information in the recommended research viewpoint information table 120 (S1414). The recommended research viewpoint extraction process S1216 ends at this point, after which the flow of overall process proceeds to S1217 of FIG. 12.

In FIG. 12, subsequently, the information presentation unit 160 generates a screen based on the content of the extracted recommended research viewpoint information (hereinafter, "information presentation screen 1600"), and transmits the generated information presentation screen 1600 to the user apparatus 2 (S1217).

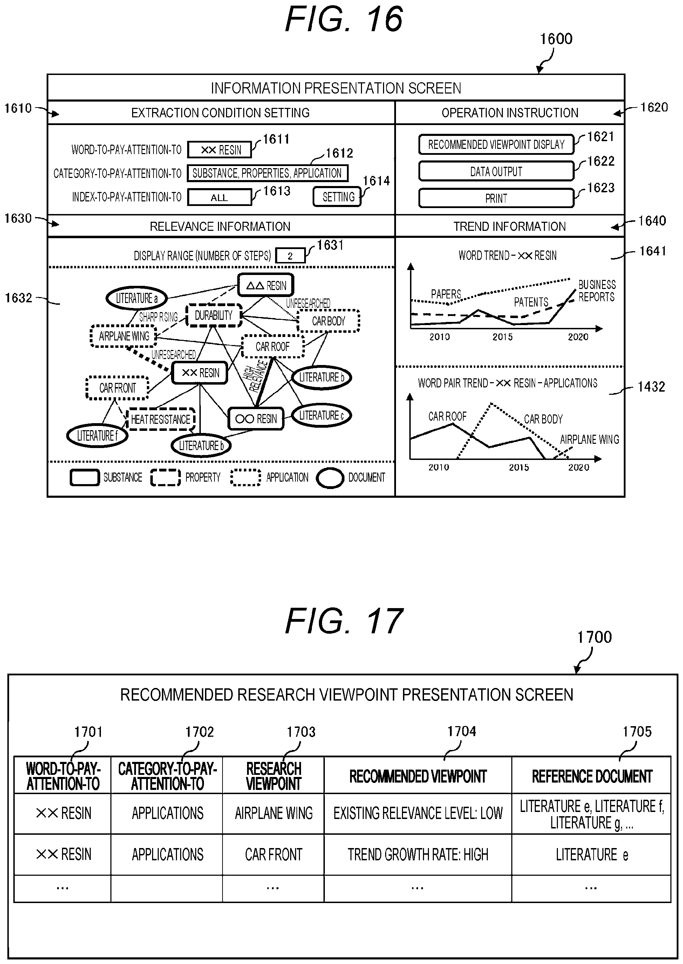

FIG. 16 shows an example of the information presentation screen 1600. The exemplified information presentation screen 1600 shown in FIG. 16 includes an extraction condition setting space 1610, an operation instruction space 1620, a relevance information display space 1630, and a trend information display space 1640. Among these setting spaces, the extraction condition setting space 1610 is identical in content and function with the extraction condition setting screen 1500 shown in FIG. 15, and is therefore omitted in further description. The user is able to reset an extraction condition, using the extraction condition setting space 1610.

The operation instruction space 1620 includes a recommended viewpoint display button 1621, a data output button 1622, and a print instruction button 1623. When the user operates the recommended viewpoint display button 1621, the information presentation unit 160 generates a screen (hereinafter, "recommended research viewpoint presentation screen 1700") showing the content of the recommended research viewpoint information table 120 and transmits the generated screen to the user apparatus 2, which receives and displays the recommended research viewpoint presentation screen 1700.

FIG. 17 shows an example of the recommended research viewpoint presentation screen 1700. As shown in FIG. 17, the content of the recommended research viewpoint information table 120 is displayed on the recommended research viewpoint presentation screen 1700.

FIG. 16 is referred to again. When the user operates the data output button 1622 in the operation instruction space 1620, the content of the information presentation screen 1600 and that of the recommended research viewpoint presentation screen 1700 are output as data. When the user operates the print instruction button 1623, the content of the information presentation screen 1600 and that of the recommended research viewpoint presentation screen 1700 are printed out.

As shown in FIG. 16, the relevance information display space 1630 includes a display range specifying space 1631 and a graph display space 1632. In the graph display space 1632, a graph indicating relationships between a word-to-pay-attention-to and other related words, properties, applications, documents, etc., is displayed.

The user specifies a distance to the word-to-pay-attention-to (the number of edge steps) in the display range specifying space 1631, thereby setting the display range of the graph (display information volume). The graph shown in FIG. 16 is a graph that is displayed when the word-to-pay-attention-to is "xx resin". This example, because "2" is set in the display range specifying space 1631, is a graph in which the number of edges to pass to reach the word-to-pay-attention-to is 2 or less.

As shown in FIG. 16, a node "×× resin", which is the word-to-pay-attention-to, is connected to nodes "durability" and "heat resistance", the nodes representing words of properties related to the word-to-pay-attention-to, via edges. The node of the word-to-pay-attention-to is connected also to nodes "airplane wing", "car front", and "car roof", the nodes representing words of applications related to the word-to-pay-attention-to, via edges. The node of the word-to-pay-attention-to is connected further to a node "oo resin", the node representing a substance related to the word-to-pay-attention-to, via an edge. Seeing these connections, the user is able to easily understand information concerning the word-to-pay-attention-to (substances, properties, applications). The graph displays also document IDs for documents associated respectively with the above words in the integrated information table 118, as nodes connected via edges. This allows the user to easily know where to find the word-to-pay-attention-to or information concerning the word-to-pay-attention-to.

In addition, an edge connecting word nodes representing a word pair with a high potential relevance level and a low existing relevance level (which are, in this example, "xx resin" and "airplane wing") is highlighted (in the form of, in this example, a dotted line), and has a note "unresearched" attached to the edge. This allows the user to visually recognize with ease that the word pair is a recommended viewpoint to be presented in priority which is potentially important and from which no or few existing researches has been conducted.

Meanwhile, an edge connecting word nodes representing a word pair with a high potential relevance level and a high existing relevance level has a note "high relevance" attached to the edge. This allows the user to visually recognize with ease that a viewpoint indicated by the word pair is a viewpoint to pay attention to which is potentially important and from which a lots of existing researches have been conducted.

Further, an edge connecting word nodes representing a word pair with a high potential relevance level, a low existing relevance level, and a high word pair trend has a note "sharp rising" attached to the edge. This allows the user to visually recognize with ease that a viewpoint indicated by the word pair is a viewpoint which is potentially important, from which no or few existing researches has been conducted, and which offers a high trend property.

As shown in FIG. 16, the trend information display space 1640 displays a word trend graph 1641, which is a line graph generated based on the word trend table 116 for the word-to-pay-attention-to, and a word pair trend graph 1642, which is a line graph generated based on the word pair trend table 117 for the word-to-pay-attention-to. In this example, as the word trend graph 1641, a graph is drawn for each extraction source document from which the word-to-pay-attention-to is extracted (the first word extraction source document ID 1185 or the second word extraction source document ID 1186) . In addition, as the word pair trend graph 1642, a graph is drawn for each application of the word-to-pay-attention-to.

FIG. 12 is referred to again, in which the overall process S1200 ends at this point. The processes at S1211 to S1215 may be executed at timing independent of timing of execution of S1216 to S1217. For example, the processes at S1211 to S1215 may be executed at a point of time at which new information is added to the document information table 111, and the processes at S1216 to S1217 may be executed at a point of time at which the user makes a request for presentation of a research viewpoint.

As described above, the research viewpoint presentation system 1 according to this embodiment presents information based on a pair of two words selected on the basis of an index obtained by comparing a potential relevance level with an existing relevance level, to the user, as a research viewpoint. A proper research viewpoint, therefore, can be presented to the user after not only the existing relevance level based on an actual appearance frequency but also the potential relevance level determined by taking account of the meanings of words and contexts in which words appear is taken into consideration.

For example, a research viewpoint which is potentially important but from which no or few researches has been conducted can be presented to the user. In addition, for example, a research viewpoint from which lots of existing researches have been conducted and which still offers potential importance can also be presented to the user. Furthermore, for example, a proper research viewpoint can be presented to the user after word trend information, such as a word trend growth rate, and word pair trend information, such as a word pair trend growth rate, are taken into consideration.

In this manner, according to the research viewpoint presentation system 1 of this embodiment, information useful for planning a research strategy can be extracted from enormous information and be presented to the user.

One embodiment of the present invention has been described above. Obviously, the present invention is not limited to the above embodiment, and may be modified in various forms within a range not departing from the substance of the present invention. For example, the above embodiment has been described in detail for easy understanding of the present invention, and is not necessarily limited to an embodiment including all constituent elements described above. Some of constituent elements of the embodiment can be deleted therefrom or add to or replaced with other constituent elements.

For example, while the above embodiment is described as the case where various processes are carried out in units of documents, units of processing are not limited to documents. The research viewpoint presentation system 1 of the present embodiment can carry out the same processes even if sentences (sentences each including one or more lines) are used in place of documents, as units of processing.

Some or all of the above constituent elements, functional units, processing units, processing means, and the like may be provided in the form of hardware, such as properly designed integrated circuits. In addition, the above constituent elements, functions, and the like may be provided in the form of software-based programs by causing the processor to interpret and execute programs for implementing the functions. Information for implementing functions, such as programs, tables, and files, may be stored in a storage device, such as a memory, a hard disk, and a solid state drive (SSD), or in a recording medium, such as an IC card, an SD card, and a DVD.

A form of arrangement of various functional units, processing units, and databases of the information processing apparatus described above is an exemplary one. The form of arrangement of various functional units, processing units, and databases can be changed into an optimum form of arrangement, in view of the performance, processing efficiency, communication efficiency, and the like of hardware and software making up these units and device.

Configurations (schema) of the databases storing various data can be changed flexibly, in view of efficient use of resources, improved processing efficiency, improved access efficiency, improved search efficiency, and the like.

### Reference Signs List

- 1: research viewpoint presentation system
- 2: user apparatus
- 21: document registering unit
- 22: dictionary setting unit
- 100: research viewpoint presentation apparatus
- 110: storage unit
- 111: document information table
- 112: document classification table
- 113: word table
- 114: potential relevance level table
- 115: existing relevance level table
- 116: word trend table
- 117: word pair trend table
- 118: integrated information table
- 120: recommended research viewpoint Information table
- 122: dictionary
- 125: document information management unit
- 130: document classifying unit
- 135: word extracting unit
- 140: potential relevance level calculation unit
- 145: existing relevance level calculation unit
- 150: trend information generating unit
- 155: recommended research viewpoint extracting unit
- 160: information presentation unit
- 165: dictionary management unit
- S1200: overall process
- S1214: existing relevance level calculation process
- S1216: recommended research viewpoint extraction process
- 1500: extraction condition setting screen
- 1600: information presentation screen
- 1700: recommended research viewpoint presentation screen

## Claims

1. A research viewpoint presentation system configured by an information processing apparatus, the system comprising:
a document information management unit that manages a document group that is an information extraction source;
a potential relevance level calculation unit that, for the document group, calculates a potential relevance level that is a value indicating a level of potential relevance between two words, using a co-occurrence rate determined based on a meaning of a word or a context in which the word appears, taking into consideration a potential relationship between the two words included in the document group;
an existing relevance level calculation unit that, for the document group, calculates an existing relevance level that is a value indicating a level of existing relevance between two words, based on a frequency of actual appearance of the two words;
a recommended research viewpoint extracting unit that, for pairs of two words extracted from the document group, selects a pair of two words, based on an index determined by comparing the potential relevance level with the existing relevance level, and extracts recommended research viewpoint information concerning the selected pair of two words from the document group; and
an information presentation unit that outputs the extracted recommended research viewpoint information.

2. The research viewpoint presentation system according to claim 1, wherein
the recommended research viewpoint extracting unit selects the pair of two words, using a size relationship between the potential relevance level and the existing relevance level as an index, and extracts the recommended research viewpoint information concerning the selected pair of two words from the document group.

3. The research viewpoint presentation system according to claim 2, wherein
the recommended research viewpoint extracting unit selects the pair of two words of which a difference or a ratio between the potential relevance level and the existing relevance level is larger than a preset threshold, and extracts the recommended research viewpoint information concerning the selected pair of two words from the document group.

4. The research viewpoint presentation system according to claim 2, wherein
the recommended research viewpoint extracting unit selects a pair of two words of which the potential relevance level is larger than a preset threshold and the existing relevance level is larger than a preset threshold, and extracts the recommended research viewpoint information concerning the selected pair of two words from the document group.

5. The research viewpoint presentation system according to claim 2, further comprising a trend information generating unit that conducts a trend analysis of a word included in the document group, the trend analysis being based on the document, and thus determining word trend information indicating a trend in the word,
wherein the recommended research viewpoint extracting unit selects the pair of two words based on a result of comparison of the potential relevance level, the existing relevance level, and the word trend information, and extracts the recommended research viewpoint information concerning the selected pair of two words from the document group.

6. The research viewpoint presentation system according to claim 5, wherein
the recommended research viewpoint extracting unit selects the pair of two words of which a difference or a ratio between the potential relevance level and the existing relevance level is larger than a preset threshold and of which a word trend growth rate obtained from the word trend information is high, and extracts the recommended research viewpoint information concerning the selected pair of two words from the document group.

7. The research viewpoint presentation system according to claim 2, further comprising a trend information generating unit that conducts a trend analysis of a pair of two words included in the document group, the trend analysis being based on the document, and thus determining word pair trend information indicating a trend in the pair of two words,
wherein the recommended research viewpoint extracting unit selects the pair of two words based on a result of comparison of the potential relevance level, the existing relevance level, and the word pair trend information, and extracts the recommended research viewpoint information concerning the selected pair of two words from the document group.

8. The research viewpoint presentation system according to claim 7, wherein
the recommended research viewpoint extracting unit selects a pair of two words of which a difference or a ratio between the potential relevance level and the existing relevance level is larger than a preset threshold and of which a word pair trend growth rate obtained from the word pair trend information is high, and extracts the recommended research viewpoint information concerning the selected pair of two words from the document group.

9. The research viewpoint presentation system according to claim 1, wherein
the recommended research viewpoint extracting unit extracts the recommended research viewpoint information concerning a pair of two words including a word specified by a user, from the document group.

10. The research viewpoint presentation system according to claim 1, wherein
one word making up the pair of two words is a word indicating a category of the other word of the pair of two words, and
the recommended research viewpoint extracting unit extracts the recommended research viewpoint information concerning a pair of two words including a word indicating a category specified by a user from the document group.

11. The research viewpoint presentation system according to claim 1, wherein
the recommended research viewpoint extracting unit selects a pair of two words, based on the index specified by the user, and extracts the recommended research viewpoint information concerning the selected pair of two words from the document group.

12. The research viewpoint presentation system according to claim 1, wherein
the information presentation unit generates and outputs a graph in which the selected pair of two words are indicated by nodes representing the words, respectively, and an edge connecting the nodes to each other.

13. The research viewpoint presentation system according to claim 12, wherein
the information presentation unit generates and outputs the graph in which information based on the index determined for the pair of two words is attached to the edge.

14. The research viewpoint presentation system according to claim 12, wherein
the information presentation unit generates and outputs the graph in which a node representing the document that is an extraction source of the recommended research viewpoint information is connected to the node representing each word, via an edge.

15. A research viewpoint presentation method causing an information processing apparatus to execute the steps of:
managing a document group that is an information extraction source;
calculating, for the document group, a potential relevance level that is a value indicating a level of potential relevance between two words, using a co-occurrence rate determined based on a meaning of a word or a context in which the word appears, taking into consideration a potential relationship between the two words included in the document group;
calculating, for the document group, an existing relevance level that is a value indicating a level of relevance between two words, based on a frequency of actual appearance of the two words;
selecting a pair of two words for pairs of two words extracted from the document group, based on an index determined by comparing the potential relevance level with the existing relevance level;
extracting recommended research viewpoint information concerning the selected pair of two words from the document group; and
outputting the extracted recommended research viewpoint information.
